# EUROPÄISCHE PATENTANMELDUNG

(11) **EP 1 837 362 A1**
(43) Veröffentlichungstag der Anmeldung: **26.09.2007**
(21) Anmeldenummer: 06006062.1
(22) Anmeldetag: 24.03.2006
(51) Int. Cl.: C08J 3/18, C09D 133/08, C09D 5/03, C09D 133/06, C08K 3/00, C08K 7/00, C08F 12/32

(54) **Durch Coploymerisate olefinisch ungesättigter Monomere modifizierte Partikel**

(71) Anmelder: Solvay Infra Bad Hönningen GmbH, 30173 Hannover (DE)
(72) Erfinder: Die Erfindernennung liegt noch nicht vor
(74) Vertreter: Vande Gucht, Anne

(57) **Zusammenfassung**

Partikel, insbesondere Nanopartikel, die mit Copolymerisaten (A) olefinisch ungesättigter Monomere (a), herstellbar durch ein- oder mehrstufige kontrollierte radikalische Copolymerisation in einem wässrigen Medium von
(a1) mindestens einem mindestens eine chelatbildende Gruppe enthaltenden, olefinisch ungesättigten Monomer und
(a2) mindestens einem vom olefinisch ungesättigten Monomer (a1) verschiedenen olefinisch ungesättigten Monomeren, ausgewählt aus der Gruppe, bestehend aus
(a21) Monomeren der allgemeinen Formel I

**R¹R²C=CR³R⁴ (I),**

worin die Reste R¹, R², R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl-, Arylalkyl- oder Arylcycloalkylreste stehen, mit der Maßgabe, dass mindestens zwei der Variablen R¹, R², R³ und R⁴ und R4 für substituierte oder unsubstituierte Aryl-, Arylalkyl- oder Arylcycloalkylreste, insbesondere substituierte oder unsubstituierte Arylreste, stehen;
(a22) olefinisch ungesättigten Terpenkohlenwasserstoffen und
(a23) dimeren alpha-Alkylvinylaromaten;

beschichtet sind, werden beschrieben. Sie eignen sich als Polymerfüllstoff, auch für Klebstoffe.

## Beschreibung

### Gebiet der Erfindung

Die vorliegende Erfindung betrifft durch neue Copolymerisate olefinisch ungesättigter Monomere modifizierte Partikel, bevorzugt Nanopartikel, insbesondere entsprechend modifiziertes Bariumsulfat, sowie die Verwendung der Partikel, insbesondere der Nanopartikel.

### Stand der Technik

Copolymerisate olefinisch ungesättigter Monomere, die durch die kontrollierte ein- oder mehrstufige radikalische Copolymerisation von
mindestens einem ersten olefinisch ungesättigten Monomer und
mindestens einem zweiten, vom ersten olefinisch ungesättigten Monomer verschiedenen olefinisch ungesättigten Monomer der allgemeinen Formel I

   R¹R²C=CR³R⁴ (1)

   worin die Reste R¹, R², R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl-, Arylalkyl- oder Arylcycloalkylreste stehen, mit der Maßgabe, dass mindestens zwei der Variablen R¹, R² , R³ und R⁴ für substituierte oder unsubstituierte Aryl-, Arylalkyl- oder Arylcycloalkylreste, insbesondere substituierte oder unsubstituierte Arylreste, stehen;

in einem wässrigen Medium herstellbar sind, sind aus der deutschen Patentanmeldung DE 101 26 651 A1 bekannt Sie werden als Emulgatoren bei der Herstellung von pigmentierten Pulverlacksuspensionen (Pulverslurries) verwendet. Bevorzugt werden sie dabei über Pigmentpasten oder Pigmentpräparationen in die wässrigen Medien der Pulverlacksuspensionen eingetragen. Die Pigmentpasten oder Pigmentpräparationen können einen besonders hohen Gehalt an Nanopartikeln, insbesondere hydrophilen, oxidischen Nanopartikeln auf der Basis von Siliziumdioxid, Aluminiumoxid, Zinkoxid, Zirkoniumoxid und der Polysäuren und Heteropolysäuren von Obergangsmetallen vorzugsweise von Molybdän und Wolfram, aufweisen, Die Nanopartikel haben eine Primärpartikelgröße <50 nm.

Ob diese bekannten Copolymerisate in der Lage sind, als Kristallisationsinhibitoren und besonders Dispergierungsmittel gegenüber Partiklen, bevorzugt Nanopartikeln; insbesondere gegenüber Bariumsulfat-Partikeln, insbesondere Bariumsulfat-Nanopartikeln zu wirken, insbesondere um Bariumsulfat-Primärpartikel zu stabilisieren, geht aus der deutschen Patentanmeldung nicht hervor.

### Aufgabe der Erfindung

Der vorliegenden Erfindung lag die Aufgabe zugrunde, neue Partikel, bevorzugt neue Nanopartikel zur Verfügung zu stellen, insbesondere neue Bariumsulfat-Partikel, besonders neue Bariumsulfat-Nanopartikel, die copolymerisierte Kristallisationsinhibitoren bzw. Dispergiermittel aufweisen, die durch die kontrollierte radikalische Copolymerisation olefinisch ungesättigter Monomere herstellbar sind.

Außerdem war es eine Aufgabe der vorliegenden Erfindung, ein neues Verfahren zur Herstellung derart modifizierter Nanopartikel zu finden.

### Erfindungsgemäße Lösung

Demgemäß wurden Partikel, bevorzugt Nanopartikel gefunden, die Copolymerisate (A) olefinisch ungesättigter Monomere (a) als Kristallisationsinhibitor bzw. bevorzugt als Dispergiermittel enthalten, wobei die Copolymerisate herstellbar sind durch ein- oder mehrstufige kontrollierte radikalische Copolymerisation in einem wässrigen Medium von
(a1) mindestens einem mindestens eine chelatbildende Gruppe enthaltenden, olefinisch ungesättigten Monomer und
(a2) mindestens einem vom olefinisch ungesättigten Monomer (a1) verschiedenen olefinisch ungesättigten Monomer, ausgewählt aus der Gruppe, bestehend aus
(a21) Monomeren der allgemeinen Formel I

   R¹R²C=CR³R⁴ (I)

   worin die Reste R¹, R², R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl-, Arylalkyl- oder Arylcycloalkylreste stehen, mit der Maßgabe, dass mindestens zwei der Variablen R¹, R², R³ und R⁴ für substituierte oder unsubstituierte Aryl-, Arylalkyl- oder Arylcycloalkylreste, insbesondere substituierte oder unsubstituierte Arylreste, stehen;
   (a22) olefinisch ungesättigten Terpenkohlenwasserstoffen; und
   (a23) dimeren alpha-Alkylvinylaromaten.

Im Folgenden werden die vorstehend bezeichneten Copolymerisate (A) olefinisch ungesättigter Monomere (a) als » Copolymerisate (A) « bezeichnet.

Die Copolymerisate (A) können hergestellt werden, indem man
(a1) mindestens ein mindestens eine chelatbildende Gruppe enthaltendes, olefinisch ungesättigtes Monomer mit
(a2) mindestens einem vom olefinisch ungesättigten Monomer (a1) verschiedenen olefinisch ungesättigten Monomer, ausgewählt aus der Gruppe, bestehend aus
(a21) Monomeren der allgemeinen Formel I

   **R¹R²C=CR³R⁴** (I),

   worin die Reste R¹, R², R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl-, Arylalkyl- oder Arylcycloalkylreste stehen, mit der Maßgabe, dass mindestens zwei der Variablen R¹, R², R³ und R⁴ für substituierte oder unsubstituierte Aryl-, Arylalkyl- oder Arylcycloalkylreste, insbesondere substituierte oder unsubstituierte Arylreste, stehen;
   (a22) olefinisch ungesättigten Terpenkohlenwasserstoffen und
   (a23) dimeren alpha-Alkylvinylaromaten;
in einem wässrigen Medium kontrolliert radikalisch copolymerisiert.

### Vorteile der Erfindung

Im Hinblick auf den Stand der Technik war es überraschend und für den Fachmann nicht vorhersehbar, dass die Aufgabe, die der vorliegenden Erfindung zugrunde lag, durch die Partikel, insbesondere die Nanopartikel, die Copolymerisate (A) als Kristallisationsinhibitor bzw. bevorzugt als Dispersionsmittel enthalten, gelöst werden konnte.

Bevorzugt sind Bariumsulfat-Partikel, besonders Bariumsulfat-Nanopartikel, die die genannten Copolymere als Kristallisationsinhibitoren und/oder Dispergierungsmittel enthalten. Nicht zuletzt zeichnen sich Dispersionen dieser Bariumsulfat-Primärpartikel als gut stabilisiert aus.

Außerdem war es überraschend, dass sich das erfindungsgemäße Herstellverfahren für die Partikel, bevorzugt die Nanopartikel in besonders einfacher, sicherer und sehr gut reproduzierbarer Weise durchführen ließ und dass sich die Partikel, besonders die Nanopartikel in ein gut redispergierbares Pulver überführen lassen.

Die resultierenden neuen Partikel- bzw. Nanopartikel-Dispersionen, insbesondere die Bariumsulfat-Dispersionen, eignen sich hervorragend für die Herstellung von neuen, physikalisch, thermisch, mit aktinischer Strahlung sowie thermisch und mit aktinischer Strahlung härtbaren Materialien, insbesondere von neuen Beschichtungsstoffen, Klebstoffen und Dichtungsmassen sowie Vorstufen von Formteilen oder Folien mit sehr guten anwendungstechnischen Eigenschaften.

### Ausführliche Beschreibung der Erfindung

Die Copolymerisate (A), die für die Herstellung der Nanopartikel benötigt werden, sind herstellbar, indem man zumindest
(a1) mindestens ein, insbesondere ein, mindestens eine, insbesondere eine, chelatbildende Gruppe enthaltendes, olefinisch ungesättigtes Monomer mit
(a2) mindestens einem, insbesondere einem, vom olefinisch ungesättigten Monomer (a1) 5 verschiedenen olefinisch ungesättigten Monomer, ausgewählt aus der Gruppe, bestehend aus
   (a21) Monomeren der allgemeinen Formel I

      **R¹R²C=CR³R⁴** (I),

      worin die Reste R¹, R², R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl-, Arylalkyl-. oder Arylcycloalkylreste stehen, mit der Maßgabe, dass mindestens zwei der Variablen R¹, R² , R³ und R⁴ für substituierte oder unsubstituierte Aryl-, Arylalkyl- oder Arylcycloalkylreste, insbesondere substituierte oder unsubstituierte Arylreste, stehen;
   (a22) olefinisch ungesättigten Terpenkohlenwasserstoffen und
   (a23) dimeren alpha-Alkylvinylaromaten;
   sowie gegebenenfalls
(a3) mindestens einem von den Monomeren (a1) und (a2) verschiedenen, olefinisch ungesättigten Monomer in einem wässrigen Medium kontrolliert radikalisch copolymerisiert.
   Dabei enthalten die olefinisch ungesättigten Monomere (a1) mindestens eine, insbesondere eine, chelatbildende Gruppe, die in der Lage ist so genannte Chelate zu bilden (vgl. Römpp Online, Georg Thieme Verlag, Stuttgart New York, 2005, "Chelate").
   Vorzugsweise ist die chelatbildende Gruppe des Monomeren (a1) mindestens zweizähnig, insbesondere zweizähnig (vgl. Römpp Online 2005, »Chelate).

Bevorzugt enthält die chelatbildende Gruppe mindestens zwei, insbesondere zwei, Atomgruppierungen, die als Elektronendonatoren wirken. Über diese Atomgruppierungen sind die Monomeren (A1) in der Lage, mit Metallatomen oder Metallkationen Koordinationsverbindungen zu bilden.

Besonders bevorzugt werden Atomgruppierungen verwendet, die aus der Gruppe, bestehend aus Carbonylgruppen (>C=O), Thiocarbonylgruppen (>C=S), Ethergruppen (- CH₂-OCH₂-), Thioethergruppen (-CH₂-S-CH₂), primären, sekundären und tertiären Aminogruppen (>C-NR⁵₂) mit R = Wasserstoffatom oder Alkylrest mit 1 bis 6 Kohlenstoffatomen, primären und sekundären Iminogruppen (>C=NR⁵) mit R⁵ = Wasserstoffatom oder Alkylrest mit 1 bis 6 Kohlenstoffatomen, Oximgruppen (>C=N..O-H), Iminoethergruppen (>C=N-O-R⁶) mit R⁶ = Alkylrest mit 1 bis 10 Kohlenstoffatomen oder Cycloalkylrest mit 4 bis 10 Kohlenstoffatomen, sowie primären, sekundären und tertären Phosphingruppen (-PR⁷₂) mit R⁷ = Wasserstoffatom oder Alkylrest mit 1 bis 6 Kohlenstoffatomen, Cycloalkylrest mit 4 bis 10 Kohlenstoffatomen oder Arylrest mit 6 bis 10 Kohlenstoffatomen, ausgewählt sind. Ganz besonders bevorzugt sind die Atomgruppierungen Carbonylgruppen (>C=O).

Insbesondere sind die chelatbildenden Gruppen 1,3-Dicarbonylgruppen, speziell Acetoacetoxy-Gruppen (CH₃-C(O)-CH₂-C(O)-O-).

Vorzugsweise sind die olefinisch ungesättigten Gruppen der Monomeren (a1) aus der Gruppe, bestehend aus (Meth)Acrylat-, Ethacrylat-, Crotonat-, Cinnamat-, Vinylether-, Vinylester-, Dicyclopentadienyl-, Norbornenyl-, lsoprenyl-, Isopropenyl-, Allyl- oder Butenylgruppen; Dicyclopentadienyl-, Norbornenyl-, Isoprenyl-, Isopropenyl-, Allyl- oder Butenylethergruppen oder Dicyclopentadienyl-, Norbornenyl-, isoprenyl-, Isopropenyl-, Allyl-. oder Butenylestergruppen, ausgewählt.

Insbesondere sind die olefinisch ungesättigten Gruppen (Meth)Acrylatgruppen.

Hier und im Folgenden wird der Begriff »(Meth)Acrylatgruppen « als Kurzfassung für "Acrylatgruppen und/oder Methacrylatgruppen" verwendet

in einem Monomeren (a1) ist die chelatbildende Gruppe oder sind die chelatbildenden Gruppen mit der olefinisch ungesättigten Gruppe oder den olefinisch ungesättigten Gruppen über mindestens eine kovalente Bindung oder über eine mindestens zweibindige, insbesondere zweibindige, verknüpfende Gruppe verbunden.

Vorzugsweise ist in dem Monomeren (a1) eine chelatbildende Gruppe mit einer olefinisch ungesättigten Gruppe über eine zweibindige verknüpfende Gruppe verknüpft.

Als zweibindige verknüpfende Gruppe kommen 1 m Grunde alle zweibindigen organischen Gruppen in Betracht, die inert sind.

Im Rahmen der vorliegenden .Erfindung bedeutet "inert", dass die betreffenden zweibindigen verknüpfenden Gruppen bei der Herstellung der Copolymerisate (A) die kontrollierte radikalische Copolymerisation nicht inhibieren und vor, während und nach der Herstellung der Copolymerisate (A) keine unerwünschten Nebenreaktionen, wie z. B. Zersetzungsreaktionen, auslösen.

Vorzugsweise handelt es sich bei den zweibindigen verknüpfenden Gruppen um Gruppen die Alkylengruppen, Cycloalkylengruppen und/oder Arylengruppen enthalten oder hieraus bestehen. Bevorzugt werden Alkylengruppen, besonders bevorzugt Alkylengruppen mit 2 bis 6 Kohlenstoffatomen, insbesondere 1,2-Ethylengruppen, verwendet.

Beispiele ganz besonders gut geeigneter Monomere (a1) sind 2-(Acetoacetoxy)ethylmethacrylat und -acrylat, insbesondere -methacrylat, das unter der Marke Lonzamon® AAEMA von der Firma Lonza vertrieben wird.

Die bei der kontrollierten radikalischen Copolymerisation eingesetzte Menge an olefinisch ungesättigtem Monomer (a1) kann sehr breit variieren und daher hervorragend an die Erfordernisse des Einzelfalls angepasst werden. Vorzugsweise liegt die Menge an (a1), jeweils bezogen auf die Summe der Monomeren (a1) und (a2), bei 1 bis 99,9 Gew.-%, bevorzugt 2 bis 99 Gew.-%, besonders bevorzugt 3 bis 98 Gew.-% und insbesondere 5 bis 97 Gew.-%.

Als Monomere (a2) können Monomere (a21) der allgemeinen Formel I verwendet werden.

In der allgemeinen Formel I stehen die Reste R¹, R², R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl-, Arylalkyl- oder Arylcycloalkylreste, mit der Maßgabe, dass mindestens zwei der Variablen R¹, R², R³ und R⁴ für substituierte oder unsubstituierte Aryl-, Arylalkyl- oder Arylcycloalkylreste, insbesondere substituierte oder unsubstituierte Arylreste, stehen.

Beispiele geeigneter Alkylreste sind Methyl, Ethyl, Propyl, Isopropyl, n-Butyl, iso-Butyl, tert.Butyl, Amyl, Hexyl oder 2-Ethylhexyl.

Beispiele geeigneter Cycloalkylreste sind Cyclobutyl, Cyclopentyl oder Cyclohexyl.

Beispiele geeigneter Alkylcycloalkylreste sind Methylencyclohexan, Ethylencyclohexan oder Propan-1,3-diyl-cyclohexan.

Beispiele geeigneter Cycloalkylalkylreste sind 2-, 3- oder 4-Methyl-, -Ethyl-, -Propyl- oder -Butylcyclohex-1-yl.

Beispiele geeigneter Arylreste sind Phenyl, Naphthyl oder Biphenylyl.

Beispiele geeigneter Alkylarylreste sind Benzyl oder Ethylen- oder Propan-1 ,3-diylbenzol.

Beispiele geeigneter Cycloalkylarylreste sind 2-, 3-, oder 4-Phenylcyclohex-1-yl.

Beispiele geeigneter Arylalkylreste sind 2-, 3- oder 4-Methyl-, -Ethyl-, -Propyl- oder Butylphen-1-yl.

Beispiele geeigneter Arylcycloalkylreste sind 2-, 3- oder 4-Cyclohexylphen-1-yl.

Die vorstehend beschriebenen Reste R¹, R², R³ und R⁴ können substituiert sein. Hierzu können Elektronen ziehende oder Elektronen schiebende Atome oder organische Reste verwendet werden.

Beispiele geeigneter Substituenten sind Halogenatome, insbesondere Chlor und Fluor, Nitrilgruppen, Nitrogruppen, partiell oder vollständig halogenierte, insbesondere chlorierte und/oder fluorierte, Alkyl-, Cycloalkyl-, Alkylcycloalkyl-, Cycloalkylalkyl-, Aryl-, Alkylaryl-, Cycloalkylaryl- Arylalkyl- und Arylcycloalkylreste, inklusive der vorstehend beispielhaft genannten, insbesondere tert.Butyl; Aryloxy-, Alkyloxy- und Cycloalkyloxyreste, insbesondere Phenoxy, Naphthoxy, Methoxy, Ethoxy, Propoxy, Butyloxy oder Cyclohexyloxy; Arylthio-, Alkylthio- und Cycloalkylthioreste, insbesondere Phenylthio, Naphthylthio, Methylthio, Ethylthio Propylthio, Butylthio oder Cyclohexylthio; Hydroxylgruppen; und/oder primäre, sekundäre und/oder tertiäre Aminogruppen, insbesondere Amino, N-Methylamino, N-Ethylamino, N-Propylamino, N-Phenylamino, N Cyclohexylamino, N, N-Dimethylamino, N,N-Diethyamino, N,N-Dipropylamino, N,N-Diphenylamino, N,N-Dicyclohexylamino, N-Cyclohexyl-N-methylamino oder N-Ethyl-N methylamino.

Beispiele für besonders bevorzugt verwendete Monomere (a21) sind Diphenylethylen, Dinaphthalinethylen, cis- oder trans-Stilben, Vinyliden-bis(4-N, N-Dimethylaminobenzol), Vinyliden-bis (4-aminobenzol) oder Vinyliden-bis(4-nitrobenzol).

Die Monomeren (a21) können einzeln oder als Gemisch aus mindestens zwei Monomeren (a21) verwendet werden.

Hinsichtlich der Reaktionsführung und der Eigenschaften der resultierenden Copolymerisate (A) ist Diphenylethylen (a21) von ganz besonderem Vorteil und wird deshalb ganz besonders bevorzugt als Monomer (a21) der allgemeinen Formel I verwendet.

Des Weiteren können als Monomere (a2) olefinisch ungesättigte Terpenkohlenwasserstoffe (a22) verwendet werden.

Die olefinisch ungesättigten Terpenkohlenwasserstoffe (a22) sind übliche und bekannte, natürlich vorkommende oder synthetische Verbindungen. Vorzugsweise werden olefinisch ungesättigte Terpenkohlenwasserstoffe verwendet, die keine reaktiven funktionellen Gruppen, wie Hydroxylgruppen, Aminogruppen oder Carbonylgruppen, enthalten.

Bevorzugt wird der olefinisch ungesättigte Terpenkohlenwasserstoff (a22) aus der Gruppe, bestehend aus acyclischen Diterpenen, monocyclischen Terpenen, bicyclischen Terpenen, acyclischen Sesquiterpenen, monocyclischen Sesquiterpenen, bicyclischen Sesquiterpenen, tricyclischen Sesquiterpenen, acyclischen Diterpenen, monocyclischen Diterpenen und tricyclischen Diterpenen, ausgewählt.

Besonders bevorzugt wird der Terpenkohlenwasserstoff (a22) aus der Gruppe, bestehend aus acyclischen Monoterpenen, monocyclischen Terpenen und bicyclischen Terpenen, ausgewählt. Ganz besonders bevorzugt wird der Terpenkohlenwasserstoff (a22) aus der Gruppe, bestehend aus Ocimen, Myrcen, den Menthenen, den Menthadienen, alpha-Pinen und beta-Pinen, ausgewählt.

Insbesondere werden die Menthadiene (a22) aus der Gruppe, bestehend aus alpha-Terpinen, beta-Terpinen, gamma-Terpinen, Terpinolen, alpha-Phellandren, beta-Phellandren, Limonen und Dipenten, ausgewählt.

Speziell wird gamma-Terpinen als Monomer (a22) eingesetzt.

Als Monomere (a2) können nicht zuletzt dimere alpha-Alkylvinylaromaten (a23) und vorzugsweise dimere alpha-Alkylstyrole (a23), insbesondere dimeres alpha-Methylstyrol (a23), eingesetzt werden.

Bei der kontrollierten radikalischen Copolymerisation kann die Menge der eingesetzten Monomeren (a2) breit variieren und so hervorragend den Erfordernissen des Einzelfalls angepasst werden. Vorzugsweise liegt die Menge an (a2), jeweils bezogen auf die Summe der Monomeren (a1) und (a2), bei 0,1 bis 99 Gew.-%, bevorzugt 1 bis 98 Gew.-%, besonders bevorzugt 2 bis 97 Gew.-% und insbesondere 3 bis 95 Gew.-%.

Die vorstehend beschriebenen olefinisch ungesättigten Monomere (a1) und (a2) können noch mit mindestens einem hiervon verschiedenen, olefinisch ungesättigten Monomeren (a3) copolymerisiert werden. Vorzugsweise werden mindestens zwei olefinisch ungesättigte Monomere (a3) verwendet.

Die Struktur der olefinisch ungesättigten Monomeren (a3) kann stark variieren. Wesentlich ist, dass die olefinisch ungesättigten Monomeren (a3) mit den vorstehend beschriebenen olefinisch ungesättigten Monomeren (a1) und (a2) kontrolliert radikalisch copolymerisierbar sind und dabei keine unerwünschten Nebenreaktionen verursachen.

Die olefinisch ungesättigten Monomeren (a3) können die unterschiedlichsten funktionellen Gruppen enthalten oder frei von diesen sein. Enthalten sie funktionelle Gruppen, so dürfen diese mit den chelatbildenden Gruppen der Monomeren (a1) keine unerwünschten physikalischen und chemischen Wechselwirkungen eingehen und die kontrollierte radikalische Copolymerisation weder inhibieren noch beschleunigen. Der Fachmann kann daher geeignete olefinisch ungesättigte Monomere (a3) aufgrund seines allgemeinen Fachwissens in einfacher Weise gegebenenfalls unter Zuhilfenahme einiger weniger orientierender Versuche auswählen.

Die olefinisch ungesättigten Monomeren (a3) dienen der Variation des Eigenschaftsprofils der Copolymerisate (A). Wegen der Vielzahl geeigneter olefinisch ungesättigter Monomere (a3) kann das Eigenschaftsprofil der Copolymerisate (A) in einfacher Weise außerordentlich breit variiert und den Erfordernissen des jeweiligen Verwendungszwecks hervorragend angepasst werden, was ein ganz besonderer Vorteil der Copolymerisate (A) ist.

Beispiele geeigneter olefinisch ungesättigter Monomere (a3) sind aus der deutschen Patentanmeldung DE 101 26 651 A1, Seiten 4 bis 5, Absätze [0024] und [0025], bekannt.

Die Copolymerisate (A) werden im Rahmen des vorstehend beschriebenen Verfahrens durch die kontrollierte radikalische Copolymerisation der vorstehend beschriebenen olefinisch ungesättigten Monomere (a1) und (a2) sowie gegebenenfalls (a3), vorzugsweise (a1), (a2) und (a3), hergestellt.

Vorzugsweise werden die olefinisch ungesättigten Monomere (a1), (a2) und (a3) in Mengen von, jeweils bezogen auf (a1), (a2) und (a3),
1 bis 30 Gew.-%, bevorzugt 2 bis 20 Gew.-% und insbesondere 5 bis 15 Gew.-% (a1),
0,1 bis 25 Gew.-%, bevorzugt I bis 15 Gew.-% und insbesondere 2 bis 10 Gew.-% (a2) und
45 bis 98,9 Gew.-%, bevorzugt 65 bis 97 Gew.-% und insbesondere 75 bis 93 Gew.-% (a3)

### verwendet.

Die Monomeren (a1) und (a2) sowie gegebenenfalls (a3) werden in Gegenwart mindestens eines radikalischen Initiators miteinander zu dem Copolymerisat (A) umgesetzt. Als Beispiele für einsetzbare Initiatoren werden genannt: Dialkylperoxide, wie Di-tert.-Butylperoxid oder Dicumylperoxid; Hydroperoxide, wie Cumolhydroperoxid oder tert.-Butylhydroperoxid; Perester, wie tert.-Butylperbenzoat, tert.-Butylperpivalat, tert.-Butylper-3,5,5-trimethylhexanoat oder tert.-Butylper-2-ethylhexanoat; Kalium-, Natrium- oder Ammoniumperoxodisulfat; Azodinitrile wie Azobisisobutyronitril; C-C-spaltende Initiatoren wie Benzpinakolsilylether; oder eine Kombination eines nicht oxidierenden Initiators mit Wasserstoffperoxid.

Vorzugsweise werden vergleichsweise große Mengen an radikalischem Initiator zugegeben, wobei der Anteil des Initiators am Reaktionsgemisch, jeweils bezogen auf die Gesamtmenge der Monomeren (a1) und (a2) sowie gegebenenfalls (a3) und des Initiators, bevorzugt 0,5 bis 50 Gew.-%, besonders bevorzugt 1 bis 20 Gew.-% und insbesondere 2 bis 15 Gew.-% beträgt.

Vorzugsweise beträgt das Gewichtsverhältnis von Initiator zu den Monomeren (a2) 4: 1 bis I : 4, besonders bevorzugt 3: 1 bis I : 3 und insbesondere 2: 1 bis I : 2. Weitere Vorteile resultieren, wenn der Initiator innerhalb der angegebenen Grenzen im Überschuss eingesetzt wird.

Vorzugsweise wird die radikalische Copolymerisation in üblichen und bekannten Vorrichtungen, insbesondere Rührkesseln, Rohrreaktoren oder Taylorreaktoren, durchgeführt, wobei die Taylorreaktoren so ausgelegt werden, dass auf der gesamten Reaktorlänge die Bedingungen der Taylorströmung erfüllt sind, selbst wenn sich die kinematische Viskosität des Reaktionsmediums aufgrund der Copolymerisation stark ändert, insbesondere ansteigt.

Die Copolymerisation wird in einem wässrigen Medium durchgeführt.

Das wässrige Medium enthält im wesentlichen Wasser. Hierbei kann das wässrige Medium in untergeordneten Mengen organische Lösemittel und/oder sonstige gelöste feste, flüssige oder gasförmige organische und/oder anorganische, nieder- und/oder hochmolekulare Stoffe enthalten, sofern diese nicht die Copolymerisation in negativer Weise beeinflussen oder gar hemmen. Im Rahmen der vorliegenden Erfindung ist unter dem Begriff "untergeordnete Menge" eine Menge zu verstehen, welche den wässrigen Charakter des wässrigen Mediums nicht aufhebt. Bei dem wässrigen Medium kann es sich aber auch um reines Wasser handeln.

Vorzugsweise wird die Copolymerisation in der Gegenwart mindestens einer Base durchgeführt. Besonders bevorzugt sind niedermolekulare Basen wie Natronlauge, Kalilauge, Ammoniak, Diethanolamin, Triethanolamin, Mono-, Di- und Triethylamin, und/oder Dimethylethanolamin, insbesondere Ammoniak und/oder Di- und/oder Triethanolamin.

Die Copolymerisation wird in vorteilhafter Weise bei Temperaturen oberhalb der Raumtemperatur und unterhalb der niedrigsten Zersetzungstemperatur der jeweils verwendeten Monomeren (a1) und (a2) sowie gegebenenfalls (a3) durchgeführt, wobei bevorzugt ein Temperaturbereich von 10 bis 150°C, ganz besonders bevorzugt 70 bis 120°C und insbesondere 80 bis 110°C gewählt wird.

Bei Verwendung besonders leichtflüchtiger Monomeren (a1) und (a2) sowie gegebenenfalls (a3) kann die Copolymerisation auch unter Druck, vorzugsweise unter 1,5 bis 3.000 bar, bevorzugt 5 bis 1.500 und insbesondere 10 bis 1.000 bar durchgeführt werden.

Hinsichtlich zahlenmittleren und massenmittleren Molekulargewichte M und M sowie der Molekulargewichtsverteilung M_{w}/Mₙ sind die Copolymerisate (A) keinerlei Beschränkungen unterworfen.

Vorteilhafterweise wird aber die Copolymerisation so geführt, dass eine Molekulargewichtsvereilung M_{w}/Mₙ gemessen mit Gelpermeationschromatographie unter Verwendung von Polystyrol als Standard von 4, vorzugsweise ≤ 2 und insbesondere ≤1,5 sowie in einzelnen Fällen auch ≤ 1,3 resultiert.

Die Molekulargewichte Mₙ und M_{w} der Copolymerisate (A) sind durch die Wahl des Verhältnisses von Monomer (a1) und (a2) sowie gegebenenfalls (a3) zu radikalischem Initiator in weiten Grenzen steuerbar. Dabei bestimmt insbesondere der Gehalt an Monomer (a2) das Molekulargewicht, und zwar derart, dass je größer der Anteil an Monomer (a2) ist, desto geringer ist das erhaltene Molekulargewicht.

Vorzugsweise liegt das zahlenmittlere Molekulargewicht Mₙ bei 1.000 bis 100.000 Dalton, bevorzugt 1.500 bis 50.000 Dalton und insbesondere 2.000 bis 25.000 Dalton.

Bei dem Verfahren zur Herstellung der Copolymerisate (A) fallen diese in der Form feinteiliger Dispersionen an, die nachstehend als " Dispersionen (A)" bezeichnet werden. Die Teilchengröße der Dispersionen (A) kann breit variieren. Vorzugsweise liegt ihre durch die Photonenkorrelationsspektroskopie oder die Laserbeugung ermittelte mittlere Teilchengröße d₅₀ bei 1 nm bis 500 µm

Die Dispersionen (A) können als solche verwendet werden. Die Copolymerisate (A) können aber aus ihnen mit Hilfe üblicher und bekannter Methoden, wie beispielsweise Gefriertrocknung, isoliert werden und in der Form flüssiger oder feste Harze (A) verwendet werden. In welcher Form die Copolymerisate (A) eingesetzt werden, richtet sich nach den Erfordernissen des Einzelfalls.

Die Copolymerisate (A) und die Dispersionen (A) werden als Kristallisationsinhibitoren und/oder Dispergierungsmittel für Partikel, bevorzugt Nanopartikel, insbesondere bei der Herstellung von Dispersionen von Nanopartikeln, eingesetzt.

Der Begriff "Partikel" bezeichnet im Rahmen der vorliegenden Erfindung feste Verbindungen einer Primärpartikelgröße unterhalb 200 µm, vorzugsweise unterhalb 100 µm, besonders bevorzugt unterhalb 50 µm und ganz besonders bevorzugt unterhalb 20 µm. Noch mehr bevorzugt ist die Primärpartikelgröße unterhalb 10 µm, insbesondere unterhalb 5 µm, ganz besonders unterhalb von 1 µm.

Vorzugsweise werden die Partikel aus der Gruppe, bestehend aus Metallen, Verbindungen von Metallen und organischen Verbindungen, insbesondere Verbindungen von Metallen, ausgewählt.

Vorzugsweise werden die Metalle aus der Gruppe, bestehend aus Ruthenium, Osmium, Kobalt, Rhodium, Iridium, Nickel, Palladium, Platin, Silber und Gold, ausgewählt.

Vorzugsweise werden die Metallverbindungen aus den Verbindungen der Metalle der zweiten bis fünften Hauptgruppe, der dritten bis sechsten sowie der ersten und zweiten Nebengruppe des Periodensystems der Elemente sowie den Lanthaniden, und bevorzugt aus der Gruppe, bestehend aus Calcium, Strontium, Barium, Bor, Aluminium, Gallium, Silizium, Germanium, Zinn, Arsen, Antimon, Silber, Zink, Titan, Zirkonium, Hafnium, Vanadium, Mob, Tantal, Molybdän, Wolfram und Cer, ausgewählt. Insbesondere wird Barium oder Strontium verwendet.

Vorzugsweise handelt es sich bei den Verbindungen der Metalle um Oxide, Oxidhydrate, Sulfate, Carbonate, Hydroxide, Fluoride, Oxyfluoride oder Phosphate, insbesondere Sulfate. Als Nanopartikel können alle üblichen und bekannten Nanopartikel eingesetzt werden.

Insbesondere werden die Copolymerisate zur chemischen Modifizierung von Bariumcarbonat-, Strontiumcarbonat- und besonders Bariumsulfat-Partikeln verwendet. Beispielsweise kann man Blanc fixe auf diese Weise beschichten.

Eine bevorzugte Ausführungsform der vorliegenden Erfindung bezieht sich auf Nanopartikel. Im Rahmen der vorliegenden Erfindung bezeichnet der Begriff "Nanopartikel" Partikel der oben bezeichneten Art, die eine Primärpartikelgröße von kleiner 500 nm aufweisen.

Bevorzugt weisen die modifizierten Nanopartikel eine Primärpartikelgröße≤ 100 nm, besonders bevorzugt <50 nm, ganz besonders bevorzugt 5 bis 50 nm, insbesondere 10 bis 30 nm auf, gemessen mit einer Disc-Zentrifuge.

Mit ganz besonderem Vorteil werden die Copolymerisate (A) und ihre Dispersionen (A) als Kristallisationsinhibitoren und besonders als Dispergiermittel bei der Herstellung von desagglomerierten Bariumsulfat-Nanopartikeln, wie dies beispielsweise in der deutschen Patentanmeldung DE 102004010201 A1, Seite 6, Absatz [0043], bis Seite 7, Absatz [0050], analog beschrieben wird, eingesetzt. " Desagglomeriert" bedeutet, dass die durchschnittliche Sekundärpartikelgröße höchstens 30% größer ist als die durchschnittliche Primärpartikelgröße.

Zur Herstellung der mit dem Copolymer beschichteten Partikel werden die beiden Ausgangskomponenten in wässriger Lösung oder in einem organischen Lösungsmittel miteinander kontaktiert. Gewünschtenfalls kann dabei eine Zerkleinerung erfolgen. Das Kontaktieren kann beispielsweise in Mühlen, z.B. einer Kugelmühle erfolgen.

Zur Herstellung der bevorzugten Partikel, nämlich Nanopartikel, kontaktiert man entsprechende Ausgangsmaterialien. Die Vorgehensweise richtet sich nach der Beschaffenheit des Ausgangsmaterials.

Man verwendet Ausgangsmaterial, das bereits in Form von Nanopartikeln vorliegt. Je nach chemischer Zusammensetzung und Art der Herstellung kann es in Form von Sekundärpartikeln (Agglomeraten) vorliegen, die weitaus größer sein können als die Primärpartikel selbst. Liegen keine Agglomerate vor, so reicht es aus, dieses Ausgangsmaterial mit dem oben beschriebenen Dispergiermittel zu beschichten. Dies kann durch Kontaktieren des Ausgangsmaterials mit der wässrigen Dispersion des Dispergiermittels bewirkt werden, beispielsweise in einem gerührten Behältnis; anstelle von Wasser können auch organische Lösungsmittel wie Alkohole, Ether, Ester oder halogenierte Kohlenstoff(wasser)verbindungen eingesetzt werden. Gewünschtenfalls kann man zur Herbeiführung eines innigen Kontaktes der Partikel mit dem Copolymerisat Dissolver verwenden.

Es lassen sich auch Nanopartikel mit dem Dispergiermittel bes chichten, die zwar in Form nanofeiner Nanopartikel vorliegen, die aber agglomeriert sind. Bariumsulfat fällt beispielsweise bei der Fällung in Form nanofeiner Partikel an, diese agglomerieren jedoch sehr stark; die beim Trocknen gebildeten Agglomerate sind sehr hart und nur schwer mechanisch zu desagglomerieren. Diese Agglomerate müssen desagglomeriert werden, wenn man beschichtete Partikel herstellen will, die sowohl bezüglich der Primärpartikel als auch der Sekundärpartikel nanofein sein sollen. Das Desagglomerieren der Sekundärpartikel kann zwar vor dem Beschichten mit dem Dispergiermittel erfolgen. Bevorzugt ist es aber, Desagglomeration der Sekundärpartikel und ihre Beschichtung gleichzeitig vorzunehmen, weil dabei ein intensiver Kontakt der ausgangsmaterialien gewährleistet ist.

Die Herstellung der modifizierten Nanopartikel wird im Folgenden am Beispiel von Bariumsulfat weiter erläutert.

Bekanntermaßen wird Bariumsulfat durch Fällung hergestellt, indem man Bariumsalzlösungen und Sulfat enthaltende Lösungen vereinigt. Ausgangsmaterial für die Barium enthaltende Lösung ist z.B. Bariumchloridlösung oder die beim Extrahieren von Bariumsulfid aus der Reduktion von Bariumsulfat erhaltene Lösung, die Sulfatlösung ist z.B. eine Lösung von Natriumsulfat oder Schwefelsäure. Dabei fällt das Bariumsulfat in form nanofeiner Primärpartikel an, die beim Trocknen agglomerieren.

Gemäß einer Ausführungsform wird Bariumsulfat eingesetzt, das ohne Zusatz eines Kristallisationinhibitors gefällt worden ist. Das derart hergestellte Bariumsulfat wird, wie weiter unten beschrieben wird, mit der Dispersion des Copolymers in Wasser oder einem organischen Lösungsmittel intensiv vermischt und dabei die gebildeten Agglomerate desagglomeriert, beispielsweise in einem Dissolver und dann einer Kugelmühle. Dabei wird ein mit dem Dispergiermittel beschichtetes Bariumsulfat erhalten, das keinen Kristallisationsinhibitor enthält. Die Zerkleinerung wird solange durchgeführt, bis der gewünschte Feinheitsgrad erreicht ist.

Gemäß einer anderen Ausführungsform wird Bariumsulfat in Anwesenheit eines Kristallisationsinhibitors gefällt. Anhand dieser Ausführungsform wird die Erfindung weiter erläutert.

Sie lehnt sich an die Herstellung von chemisch modifiziertem Bariumsulfat an, wie dies in der WO05/054133 beschrieben ist.

Das Bariumsulfat kann nach bekannten Methoden durch Fällung unter Verwendung von Kristallisationsinhibitoren hergestellt worden sein; solche Kristallisationsinhibitoren sind in der WO 2005/054133 genannt. Es ist besonders bevorzugt, wenn das Bariumsulfat unter Verwendung von Kristallisationsinhibitoren wie Polyacrylat oder Citrat gefällt worden ist. Das Copolymer kann ebenfalls als Kristallisationsinhibitor verwendet werden. Wie schon erwähnt, bilden die nanofeinen Primärpartikel des Bariumsulfats bei der Fällung üblicherweise größere Agglomerate (Sekundärpartikel), die nur schwer desagglomeriert werden können und sich dann leicht erneut bilden können. Das Gemisch von Bariumsulfat und wässriger Dispersion des Copolymerisats wird deshalb intensiv vermischt und dabei vorhandene Sekundärteilchen des Bariumsulfats weitgehend zerkleinert; hierzu wird das wässrige Gemisch (oder das Gemisch in einem organischen Lösungsmittel, falls ein solches verwendet wurde), das das Copolymerisat, Bariumsulfat und Wasser enthält, durch geeignete Zerkleinerungsapparaturen geführt. Es hat sich als vorteilhaft erwiesen, das Gemisch zunächst durch einen Dissolver und dann durch eine Mühle zu leiten. Gut geeignet sind z.B. Kugelmühlen. Die Zerkleinerung wird bis zum Erreichen des gewünschten Feinheitsgrades durchgeführt. Die Sekundärpartikel des Bariumsulfats werden überwiegend desagglomeriert, und es bildet sich eine Dispersion von desagglomerierten Nanopartikeln, die mit dem Copolymer beschichtet sind.

Es lassen sich Dispersionen der Bariumsulfat-Nanopartikel herstellen, die einen besonders hohen Gehalt an Bariumsulfat-Nanopartikeln von bis zu 70 Gew.-%, bezogen auf die Dispersion, aufweisen.

Die erfindungsgemäßen desagglomerierten Bariumsulfat-Nanopartikel, ob mit oder ohne Kristallisationsinhibitor hergestellt, können aus ihren Dispersionen durch Abtrennung des Wassers (oder etwaig verwendeter anderer Lösungsmittel) isoliert und bis zu ihrer weiteren Verwendung problemlos gelagert und transportiert werden. Dabei erweist sich als ganz besonderer Vorteil der erfindungsgemäßen desagglomerierten Nanopartikel, besonders der Bariumsulfat-Nanopartikel, dass sie zwar beim Abtrennen des Wassers bzw. des verwendeten organischen Lösungsmittels eine Art von Agglomeraten bilden, dass diese aber wegen ihres Gehalts an Copolymerisaten (A) besonders leicht in Wasser und/oder organischen Lösemitteln redesagglomeriert und redispergiert werden können. Derartige mit Dispergiermittel beschichtete Nanopartikel in Form eines redispergierbaren, desagglomerierten Feststoffes, wie sie beim vorstehend beschriebenen Verfahren erhältlich sind, sind ebenfalls Gegenstand der Erfindung. Bevorzugt liegt der Feststoff in Form eines Pulvers vor.

Vorzugsweise liegt der Gehalt des Gemischs aus den desagglomerierten Bariumsulfat-Nanopartikeln und den Copolymerisaten (A) an Nanopartikeln bei 10 bis 90 Gew.-%, bevorzugt 15 bis 85 Gew.-% und insbesondere 20 bis 80 Gew.-% und an (A) bei 90 bis 10 Gew.-% bevorzugt 85 bis 15 Gew.-% und insbesondere 80 bis 20 Gew.-%, jeweils bezogen auf das Gemisch.

Die vorstehend beschriebenen erfindungsgemäßen Nanopartikel, die die Copolymerisate (A) enthalten, insbesondere in der Form ihrer Dispersionen oder als isolierte Nanopartikel, können allgemein als Füllstoff für Polymere verwendet werden, z.B. für die Herstellung physikalisch, thermisch, mit aktinischer Strahlung und thermisch und mit aktinischer Strahlung härtbarer Materialien.

Im Rahmen der vorliegenden Erfindung ist unter aktinischer Strahlung elektromagnetische Strahlung wie nahes infrarot (NiR), sichtbares Licht, UV-Strahlung, Röntgenstrahlung oder Gammastrahlung, insbesondere UV-Strahlung, und Korpuskularstrahlung wie Elektronenstrahlung, Betastrahlung, Alphastrahlung Protonenstrahlung und Neutronenstrahlung, insbesondere Elektronenstrahlung, zu verstehen.

Die härtbaren Materialien sind hervorragend für die Herstellung von thermoplastischen und duroplastischen Materialien geeignet.

Vorzugsweise werden die härtbaren Materialien als Beschichtungsstoffe, Klebstoffe, Dichtungsmassen sowie Vorstufen für Formteile und Folien für die Herstellung von Beschichtungen, Klebschichten, Dichtungen, Formteile und Folien verwendet, z.B. für die Herstellung von hochkratzfesten, pigmentierten und nicht pigmentierten Lackierungen, bevorzugt transparenten, insbesondere klaren, Klarlackierungen, Formteilen, insbesondere optischen Formteilen, und freitragenden Folien.

Die Lackierungen sind beispielsweise hochkratzfeste Klarlackierungen sowie hochkratzfeste Klarlackierungen im Rahmen von farb- und/oder effektgebenden Mehrschichtlackierungen auf üblichen und bekannten Substraten (vgl. hierzu 35 die internationale Patentanmeldung WO 03/016411, Seite 41, Zeile 6, bis Seite 43, Zeile 6, in Verbindung mit Seite 44, Zeile 6, bis Seite 45, Zeile 6).

Die Herstellung der thermoplastischen und duroplastischen Materialien aus den härtbaren Materialien weist keine methodischen Besonderheiten auf, sondern wird mit Hilfe üblicher und bekannter Verfahren und Vorrichtungen, die für das jeweilige thermoplastische oder duroplastische Material typisch sind, durchgeführt.

Insbesondere werden die Beschichtungsstoffe mit Hilfe der in der internationalen Patentanmeldung WO 03/016411, Seite 37, Zeilen 4 bis 24, beschriebenen, üblichen und bekannten Verfahren und Vorrichtungen auf Substrate appliziert.

Die Härtung der härtbaren Materialien kann, wie in der internationalen Patentanmeldung WO 031016411, Seite 38, Zeile 1, bis Seite 41, Zeile 4, beschrieben, durchgeführt werden.

Die härtbaren Materialien liefern thermoplastische und duroplastische, insbesondere duroplastische, Materialien, insbesondere Lackierungen, speziell Klarlackierungen, Formteile, speziell optische Formteile, und freitragende Folien, die hoch kratzfest und chemikalienstabil sind. Insbesondere lassen sich die Lackierungen, speziell die Klarlackierungen, auch in Schichtdicken > 40 µm herstellen, ohne dass Spannungsrisse auftreten.

Die thermoplastischen und duroplastischen, insbesondere duroplastischen, Materialien eignen sich daher hervorragend als hochkratzfeste, dekorative, schützende und/oder effektgebenden Lackierungen von Karosserien von Fortbewegungsmitteln jeglicher Art (insbesondere mit Muskelkraft betriebene Fortbewegungsmitte, wie Fahrräder, Kutschen oder Draisinen; mit Motoren betriebene Fortbewegungsmittel, wie Fluggeräte, insbesondere Flugzeuge, Helikopter oder Zeppeline; Schwimmkörper, wie Schiffe oder Bojen; Schienenfahrzeuge, wie Lokomotiven, Triebwagen und Eisenbahnwaggons; sowie Kraftfahrzeuge, wie Motorräder, Busse, LKW oder PKW) oder von Teilen hiervon; von Bauwerken im Innen- und Außenbereich; von Möbeln, Fenstern und Türen; von Kunststoffformteilen vor allem aus Polycarbonat, insbesondere CDs und Fenster, speziell Fenster im Automobilbereich; von industriellen Kleinteilen; von Coils, Containern und Emballagen; von weißer Ware; von Folien; von optischen, elektrotechnischen und mechanische Bauteilen sowie von Glashohlkörpern und Gegenständen des täglichen Bedarfs.

Insbesondere können die Lackierungen, ganz besonders die Klarlackierungen, in dem technologisch und ästhetisch besonders anspruchsvollen Gebiet der Automobilserienlackierung (OEM) eingesetzt werden. Dabei zeichnen sie sich vor allem durch eine besonders hohe Waschstraßenbeständigkeit und Kratzfestigkeit, insbesondere Trockenkratzfestigkeit, aus.

Die Nanopartikel können auch als Füllstoff in Polymeren wie Epoxid, Polyalkylentephthalaten (PET, PBT) oder Polyurethan eingesetzt werden.

Die vorstehenden Ausführungen gelten besonders für desagglomeriertes Bariumsulfat, das mit den oben beschriebenen Dispergiermitteln beschichtet wurde.

### Beispiel 1

### Die Herstellung eines Copolymerisats (A)

In einem Stahlreaktor eines Volumens von fünf Liter wurden 1.716,9 g deionisiertes Wasser vorgelegt und auf 90°C erhitzt. Anschließend wurden bei dieser Temperatur drei gleichzeitig gestartete, separate Zuläufe gleichmäßig innerhalb von vier Stunden (Zulauf 1), 3,75 Stunden (Zulauf 2) und 4,5 Stunden (Zulauf 3) unter Rühren zudosiert.

Der Zulauf 1 bestand aus 477 g Acrylsäure, 75,3 g 2-(Acetoacetoxy)ethylmethacrylat (Lonzamon® AAEMA der Firma Lonza), 199,5 g Methylmethacrylat, 267,3 g 2-Ethylhexylmethacrylat, 113 g Styrol und 50,1 g Diphenylethylen.

Der Zulauf 2 bestand aus 46,4 g 25-prozentiger Ammoniaklösung und 232,2 g deionisiertem Wasser.

Der Zulauf 3 war eine Lösung von 75,5 g Ammoniumperoxodisulfat in 176 g Wasser.

Nach Zulaufende (= Ende des Zulauf 3) schloss sich eine dreistündige Nachpolymerisation bei 90°C an. Es resultierte eine gelblich-weiße Dispersion des Copolymerisats (A) eines pH-Werts von 4,7 und eines Feststoffgehalts von 27 Gew.-% (60 Minuten/130°C).

Die Dispersion des Copolymerisats (A) war hervorragend als Kristallisationsinhibitor und Dispergierungsmittel für die Herstellung von desagglomerierten Bariumsulfat-Nanopartikeln geeignet.

### Beispiel 2

### Herstellung einer Dispersion von desagglomeriertem Bariumsulfat mit Citrat als Kristallisationsinhibitor

Die gemäß Beispiel 1 hergestellte Dispersion wurde mit Bariumsulfat, das unter Verwendung von Citrat als Kristallisationsinhibitors gefällt worden war, vermischt, so dass eine Zubereitung erhalten wurde, die etwa 50 Gew.-% Wasser, etwa 15 Gew.-% des Polymers aus Beispiel 1 und Rest auf 100 Gew.-% Bariumsulfat enthielt. Die Zubereitung wurde zunächst durch einen Dissolver passiert und danach in einer Kugelmühle zerkleinert, bis die Teilchengröße d₅₀ etwa 45 nm betrug. Die Messung erfolgte durch CPS (Disczentrifuge).

Es resultierte eine stabile Dispersion, die sich sehr gut in Polymermaterialien einarbeiten ließ.

### Beispiel 3

### Herstellung einer Dispersion von desagglomeriertem Bariumsulfat mit Na-Polyacrylat als Kristallisationsinhibitor

Die gemäß Beispiel 1 hergestellte Dispersion wurde mit Bariumsulfat, das unter Verwendung von Natriumpolyacrylat als Kristallisationsinhibitor gefällt worden war, vermischt, so dass, wie in Beispiel 2, eine Zubereitung erhalten wurde, die etwa 50 Gew.-% Wasser, etwa 15 Gew.-% des Polymers aus Beispiel 1 und Rest auf 100 Gew.-% Bariumsulfat enthielt. Die Zubereitung wurde zunächst durch einen Dissolver passiert und danach in einer Kugelmühle zerkleinert, bis die Teilchengröße d₅₀ wiederum etwa 45 nm betrug. Die Messung erfolgte durch CPS (Disczentrifuge).

Es resultierte auch mit diesem Bariumsulfatprodukt eine stabile Dispersion, die sich sehr gut in Polymermaterialien einarbeiten ließ.

### Beispiel 4

### Herstellung einer Dispersion von desagglomeriertem Bariumsulfat mit Na-Polyacrylat als Kristallisationsinhibitor

Die gemäß Beispiel 1 hergestellte Dispersion wird mit Bariumsulfat, das ohne Kristallisationsinhibitor gefällt worden ist, vermischt, so dass, wie in Beispiel 2, eine Zubereitung erhalten wird, die etwa 50 Gew.-% Wasser, etwa 15 Gew.-% des Polymers aus Beispiel 1 und Rest auf 100 Gew.-% Bariumsulfat enthält. Die Zubereitung wird zunächst durch einen Dissolver passiert und danach in einer Kugelmühle zerkleinert, bis die Teilchengröße d₅₀ wiederum etwa 45 nm beträgt. Die Messung erfolgt durch CPS (Disczentrifuge).

Es resultiert auch mit diesem Bariumsulfatprodukt eine stabile Dispersion, die sich sehr gut in Polymermaterialien einarbeiten ließ.

## Patentansprüche

**1.** Partikel, beschichtet mit einem Dispergiermittel in Form von Copolymerisaten (A) olefinisch ungesättigter Monomere (a), herstellbar durch ein- oder mehrstufige kontrollierte radikalische Copolymerisation in einem wässrigen Medium von
(a1) mindestens einem mindestens eine chelatbildende Gruppe enthaltenden, olefinisch ungesättigten Monomer und
(a2) mindestens einem vom olefinisch ungesättigter Monomer (a1) verschiedenen olefinisch ungesättigten Monomeren, ausgewählt aus der Gruppe, bestehend aus
(a21) Monomeren der allgemeinen Formel
**R¹R²C=CR³R⁴** (I),
worin die Reste R¹, R², R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl-, Arylalkyl- oder Arylcycloalkylreste stehen, mit der Maßgabe, dass mindestens zwei der Variablen R¹, R², R³ und R⁴ für substituierte oder unsubstituierte Aryl-, Arylalkyl- oder Arylcycloalkylreste, insbesondere substituierte oder unsubstituierte Arylreste, stehen;
(a22) olefinisch ungesättigten Terpenkohlenwasserstoffen und
(a23) dimeren alpha-Alkylvinylaromaten.

**2.** Partikel nach Anspruch 1, **dadurch gekennzeichnet, dass** die Partikel Nanopartikel sind.

**3.** Partikel nach Anspruch 1, **dadurch gekennzeichnet, dass** die mindestens eine chelatbildende Gruppe des Monomeren (a1) mindestens zweizähnig ist.

**4.** Partikel nach Anspruch 1, 2 oder 3, **dadurch gekennzeichnet, dass** die mindestens eine chelatbildende .Gruppe des Monomeren (a1) mindestens zwei Atomgruppierungen enthält, die als Elektronendonatoren wirken.

**5.** Partikel , nach Anspruch 4, **dadurch gekennzeichnet, dass** die Atomgruppierungen aus der Gruppe, bestehend aus Carbonylgruppen (>C=O), Thiocarbonylgruppen (>CS), Ethergruppen (-CH₂OCH₂-), Thioethergruppen (-CH₂- SCH₂-), primären, sekundären und tertiären Aminogruppen (>C-NR⁵₂) mit R = Wasserstoffatom oder Alkylrest mit 1 bis 6 Kohlenstoffatomen, primären und sekundären Iminogruppen (>CNR⁵) mit R⁵ = Wasserstoffatom oder Alkylrest mit 1 bis 6 Kohlenstoffatomen, Oximgruppen (>C=N-O-H), Iminoethergruppen (>C=N-OR 8) mit R⁶ = Alkylrest mit 1 bis 10 Kohlenstoffatomen oder Cycloalkylrest mit 4 bis 10 Kohlenstoffatomen, sowie primären, sekundären und tertiären Phosphingruppen (PR⁷₂) mit R⁷ = Wasserstoffatom oder Alkylrest mit 1 bis 6 Kohlenstoffatomen, Cycloalkylrest mit 4 bis 10 Kohlenstoffatomen oder Arylrest mit 6 bis 10 Kohlenstoffatomen, ausgewählt sind.

**6.** Partikel nach Anspruch 5, **dadurch gekennzeichnet, dass** die Atomgruppierungen Carbonylgrupppen (>C=O) sind.

**7.** Partikel nach Anspruch 6, **dadurch gekennzeichnet, dass** die chelatbildenden Gruppen 1,3-Dicarbonylgruppen sind.

**8.** Partikel-, nach einem der Ansprüche 1 bis 7, **dadurch gekennzeichnet, dass** die olefinisch ungesättigten Gruppen der Monomeren (a1) aus der Gruppe, bestehend aus (Meth)Acrylat-, Ethacrylat-, Crotonat-, Cinnamat-, Vinylether-, Vinylester-, Dicyclopentadienyl-, Norbornenyl-, lsoprenyl-, Isopropenyl-, Allyl- oder Butenylgruppen; Dicyclopentadienyl-, Norbornenyl-, Isoprenyl-, Isopropenyl-, Allyl- oder Butenylethergruppen oder Dicyclopentadienyl-, Norbornenyl-, Isoprenyl-, Isopropenyl-, Allyl- oder Butenylestergruppen, ausgewählt sind.

**9.** Partikel nach Anspruch 8, **dadurch gekennzeichnet, dass** die olefinisch ungesättigten Gruppen (Meth)Acrylatgruppen sind.

**10.** Partikel , nach Anspruch 8 oder 9, **dadurch gekennzeichnet, dass** in einem Monomeren (a1) die chelatbildende(n) Gruppe(n) mit der oder den olefinisch ungesättigten Gruppe(n) über mindestens eine kovalente Bindung oder Ober eine mindestens zweibindige verknüpfende Gruppe verbunden ist oder sind.

**11.** Partikel nach einem der Ansprüche 8 bis 10, **dadurch gekennzeichnet, dass** in einem Monomeren (a1) eine chelatbildende Gruppe mit einer olefinisch ungesättigten Gruppe über eine zweibindige verknüpfende Gruppe verknüpft ist.

**12.** Partikel nach Anspruch 10 oder 11, **dadurch gekennzeichnet, dass** die zweibindige verknüpfende Gruppe eine Alkylengruppe ist.

**13.** Partikel nach einem der Ansprüche 1 bis 12, **dadurch gekennzeichnet, dass** es sich bei den Arylresten R¹, R², R³ und/oder R⁴ der Monomeren (a21) um Phenyl- oder Naphthylreste handelt.

**14.** Partikel nach einem der Ansprüche 1 bis 13, **dadurch gekennzeichnet, dass** es sich bei den Arylresten R¹, R², R³ und/oder R⁴ der Monomeren (a21) um Phenylreste handelt.

**15.** Partikel nach einem der Ansprüche 1 bis 14, **dadurch gekennzeichnet, dass** die Substituenten in den Resten R¹, R², R³ und/oder R⁴ der Monomeren (a21) aus der Gruppe, bestehend aus Elektronen ziehenden oder Elektronen schiebenden Atomen oder organischen Resten, ausgewählt sind.

**16.** Partikel nach Anspruch 15, **dadurch gekennzeichnet, dass** die Substituenten aus der Gruppe, bestehend aus Halogenatomen, Nitril-, Nitro-, partiell oder vollständig halogenierten Alkyl-, Cycloalkyl-, Alkylcycloalkyl-, Cycloalkylalkyl-, Aryl-, Alkylaryl-, Cycloalkylaryl- Arylalkyl- und Arylcycloalkylresten; Aryloxy-, Alkyloxy- und Cycloalkyloxyresten; Arylthio-, Alkylthio- und Cycloalkylthioresten und primären, sekundären und tertiären Aminogruppen, ausgewählt sind.

**17.** Partikel nach einem der Ansprüche 1 bis 16, **dadurch gekennzeichnet, dass** der Terpenkohlenwasserstoff (a22) aus der Gruppe, bestehend aus acyclischen Diterpenen, monocyclischen Terpenen, bicyclischen Terpenen, acyclischen Sesquiterpenen, monocyclischen Sesquiterpenen, bicyclischen Sesquiterpenen, tricyclischen Sesquiterpenen, acyclischen Diterpenen, monocyclischen Diterpenen .und tricyclischen Diterpenen, ausgewählt ist.

**18.** Partikel nach einem der Ansprüche 1 bis 17, **dadurch gekennzeichnet, dass** der Terpenkohlenwasserstoff (a22) aus der Gruppe, bestehend aus acyclischen Monoterpenen, monocyclischen Terpenen und bicyclischen Terpenen, ausgewählt ist.

**19.** Partikel nach einem der Ansprüche 1 bis 18, **dadurch gekennzeichnet, dass** der Terpenkohlenwasserstoff (a22) aus der Gruppe, bestehend aus Ocimen, Myrcen, den Menthenen, den Menthadienen, alpha-Pinen und beta-Pinen, ausgewählt ist.

**20.** Partikel nach Anspruch 20, **dadurch gekennzeichnet, dass** die Menthadiene (a22) aus der Gruppe, bestehend aus alpha-Terpinen, beta-Terpinen, gamma-Terpinen, Terpinolen, alpha-Phellandren, beta-Phellandren, Limonen und Dipenten, ausgewählt sind.

**21.** Partikel nach Anspruch 20, **dadurch gekennzeichnet, dass** gamma-Terpinen (a22) ausgewählt ist.

**22.** Partikel nach einem der Ansprüche 1 bis 21, **dadurch gekennzeichnet, dass** die dimeren alpha-Alkylvinylaromaten (a23) dimere alpha-Alkylstyrole sind.

**23.** Partikel nach Anspruch 22 **dadurch gekennzeichnet, dass** als dimeres alpha-Alkylstyrol (a23) dimeres alpha-Methylstyrol eingesetzt ist.

**24.** Partikel nach einem der Ansprüche 1 bis 23, **dadurch gekennzeichnet, dass** die olefinisch ungesättigten Monomeren (a1) und (a2) mit mindestens einem hiervon verschiedenen olefinisch ungesättigten Monomeren (a3) copolymerisiert sind.

**25.** Partikel nach einem der Ansprüche 1 bis 24, **dadurch gekennzeichnet, dass** es sich um Bariumsulfatpartikel handelt.

**26.** Partikel nach Anspruch 1, **dadurch gekennzeichnet, dass** mindestens 90% der Partikel kleiner als 200 nm, vorzugsweise kleiner als 100 nm sind.

**27.** Partikel nach Anspruch 25, **dadurch gekennzeichnet, dass** das Bariumsulfat einen bei der Fällung zugesetzten Kristallisationsinhibitor enthält.

**28.** Verfahren zur Herstellung von mit einem Dispergiermittel beschichteten Partikeln, gemäß einem der Ansprüche 1 bis 27, vorzugsweise von mit einem Dispergiermittel beschichteten Nanopartikeln, **dadurch gekennzeichnet, dass** man das zu beschichtende Ausgangsmaterial mit dem Dispergiermittel zusammen einem Zerkleinerungsverfahren unterwirft, wobei das Dispergiermittel erhältlich ist dadurch, dass man zumindest
(a1) mindestens ein mindestens eine chelatbildende Gruppe enthaltendes, olefinisch ungesättigtes Monomer mit
(a2) mindestens einem vom olefinisch ungesättigten Monomer (a1) verschiedenen olefinisch ungesättigten Monomeren, ausgewh1t aus der Gruppe, bestehend aus
(a21) Monomeren der allgemeinen Formel I
**R¹R²C=CR³R⁴** (I),
worin die Reste R¹, R², R³ und R⁴ jeweils unabhängig Voneinander für Wasserstoffatome oder substituierte oder unsubstituierte Alkyl- Cycloalkyl-, Alkylcycloalkyl-, Cycloalkylalkyl-, Aryl-, Alkylaryl-, Cycloalkylaryl-, Arylalkyl- oder Arylcycloalkylreste stehen, mit der Maßgabe, dass mindestens zwei der Variablen R¹, R², R³ und R⁴ für substituierte oder unsubstituierte Aryl-, Arylalkyl- oder Arylcycloalkylreste, insbesondere substituierte oder unsubstituierte Arylreste, stehen;
(a22) olefinisch ungesättigten Terpenkohlenwasserstoffen und
(a23) dimeren alpha-Alkylvinylaromaten
in einem wässrigen Medium kontrolliert radikalisch copolymerisiert.

**29.** Verfahren nach Anspruch 28, **dadurch gekennzeichnet, dass** man die Beschichtung zunächst in einem Dissolver und dann in einer Kugelmühle durchführt, bis mit dem Dispergiermittel beschichtete Partikel, vorzugsweise mit dem Dispergiermittel beschichtete Nanopartikel entstanden sind.

**30.** Verfahren nach Anspruch 28 oder 29, **dadurch gekennzeichnet, dass** man eine wässrige Dispersion des Materials und des Dispergiermittels zerkleinert.

**31.** Verfahren nach Anspruch 28, **dadurch gekennzeichnet, dass** die Partikel bzw. Nanopartikel Bariumsulfatpartikel sind, die mit oder ohne Kristallisationsinhibitor gefällt worden sind.

**32.** Verfahren nach einem der Ansprüche 28 bis 31, **dadurch gekennzeichnet, dass** man etwaiges Lösungsmittel abtrennt und mit Dispergiermittel beschichtete Partikel, vorzugsweise mit dem Dispergiermittel beschichtete Nanopartikel, in Form eines redispergierbaren, desagglomerierten Feststoffes gewinnt.

**33.** Mit Dispergiermittel beschichtete Partikel, vorzugsweise mit dem Dispergiermittel beschichtete Nanopartikel in Form eines redispergierbaren, desagglomerierten Feststoffes, erhältlich nach dem Verfahren des Anspruches 32.

**35.** Verwendung der Partikel, vorzugsweise der Nanopartikel, gemäß einem der Ansprüche 1 bis 27 oder des Feststoffes gemäß Anspruch 32 als Zusatz in Polymeren, vorzugsweise in Epoxid, Polyalkylenterephthalat oder Polyurethan.

**36.** Verwendung der der Partikel, vorzugsweise der Nanopartikel, gemäß einem der Ansprüche 1 bis 27 oder des Feststoffes gemäß Anspruch 32 als Zusatz in Klebstoffen.
